# EUROPEAN PATENT SPECIFICATION

(11) **EP 4 207 847 B1**
(45) Date of publication and mention of the grant of the patent: **03.06.2026**
(21) Application number: 21873881.3
(22) Date of filing: 19.05.2021
(51) Int. Cl.: H04W 12/06, H04W 12/033, H04W 12/08, H04W 48/16, H04W 76/12

(54) **VIRTUAL PRIVATE DIAL-UP NETWORK ACCESS METHOD, NETWORK-SIDE SYSTEM, SYSTEM, AND STORAGE MEDIUM**
ZUGANGSVERFAHREN FÜR VIRTUELLES PRIVATES WÄHLNETZWERK, NETZWERKSEITIGES SYSTEM, SYSTEM UND SPEICHERMEDIUM
PROCÉDÉ D'ACCÈS À UN RÉSEAU PRIVÉ VIRTUEL À LIGNES COMMUTÉES, SYSTÈME DU CÔTÉ RÉSEAU, SYSTÈME, ET SUPPORT DE STOCKAGE

(30) Priority: 29.09.2020 CN 202011052664
(43) Date of publication of application: 05.07.2023
(73) Proprietor: China Telecom Corporation Limited, Beijing 100033 (CN)
(72) Inventor: LI, Mingxue, Beijing 100033 (CN); LONG, Biao, Beijing 100033 (CN)
(74) Representative: Reddie & Grose LLP
(86) International application number: PCT/CN2021/094571
(87) International publication number: WO 2022/068219

(56) References cited:
- CN-A- 111 010 673
- CN-A- 111 263 346
- CHINA TELECOMMUNICATIONS: "MEC002_VPDN on MEC_Use_Case", vol. ISG MEC Multi-access Edge Computing, 10 September 2020 (2020-09-10), pages 1 - 6, XP014377337, Retrieved from the Internet <URL:docbox.etsi.org/ISG/MEC/05-Contributions/2020/MEC(20)000289r1_MEC002_VPDN_on_MEC_Use_Case.docx> [retrieved on 20200910]
- "3rd Generation Partnership Project; Technical Specification Group Services and System Aspects; System architecture for the 5G System (5GS); Stage 2 (Release 16)", 21 September 2020 (2020-09-21), XP052454766, Retrieved from the Internet <URL:https://ftp.3gpp.org/tsg_sa/WG2_Arch/Latest_SA2_Specs/DRAFT_INTERIM/Archive/23501-g60_CRs_Implemented_Not_CR2448R1.zip 23501-g60_CRs_Implemented_Not_CR2448R1.docx> [retrieved on 20200921]
- ANONYMOUS: "3rd Generation Partnership Project; Technical Specification Group Services and System Aspects; Study on Enhanced IMS to 5GC Integration (Release 16)", 3GPP STANDARD; TECHNICAL REPORT; 3GPP TR 23.794, vol. SA WG2, no. V0.4.0, 15 June 2018 (2018-06-15), pages 1 - 65, XP051451742
- INTEL: "EPC support for mobility with low latency communication: discussion and solution proposal", 3GPP DRAFT; S2-180849_WAS0433_LLC_MOB_DP, vol. SA WG2, 23 January 2018 (2018-01-23), Gothenburg, Sweden, pages 1 - 7, XP051382351

## Description

### CROSS-REFERENCE TO RELATED APPLICATIONS

This application is based on and claims priority to the China Patent Application No. 202011052664.4 filed on September 29, 2020.

### TECHNICAL FIELD

This disclosure relates to the technical field of mobile communications, and in particular, to a method, a network-side system, a system for access to VPDN (Virtual Private Dial-up Networks) and a storage medium.

### BACKGROUND

VPDN is a virtual private network technology for communication on a public network through an encrypted tunnel. A VPDN user can be connected with an internal user network through a virtual secure channel via a public network, while other users on the public network cannot access a resource within the user network through the virtual channel.

A mechanism for authentication and authorization that is adopted by a conventional service of VPDN is PAP/CHAP, wherein the PAP (Password Authentication Protocol) is a mechanism in which authentication is established by two handshakes, a peer node continuously and repeatedly sends ID/Password (plaintext) to a verifier until the authentication is responded or connection is terminated, and is common in a PPPOE (Point-to-Point Protocol Over Ethernet) dial-up environment; and the CHAP (Challenge Handshake Authentication Protocol) is a mechanism in which an identity (ciphertext) of an authenticated party is verified by three handshakes, and the verification is completed upon the establishment of an initial link, to improve security, the verification is periodically performed after the link is established, and is currently more common in a remote access environment of an enterprise network.

The article "ME-C002 VPDN on MEC Use Case" disclosed a method to realize VPDN in 5G through MEC.

" 3rd Generation Partnership Project; Technical Specification Group Services and System Aspects; System architecture for the 5G System (5GS); Stage 2 (Release 16) " disclosed the system architecture of the 5G System.

### SUMMARY

One objective of the present disclosure is to provide a solution of access to VPDN through a 5G network. The invention is defined by the independent claims that accompany this disclosure. Any examples and embodiments of the description not falling within the scope of the claims do not form part of the invention as defined by the independent claims.

A method for access to Virtual Private Dial-up Networks (VPDN), comprising: receiving, by an Access and Mobility Management Function (AMF), an access request for VPDN from a user, the access request for VPDN comprising a Data Network Name (DNN), an account and a key of a target VPDN; determining, by the AMF, through a Network Function Repository Function (NRF), a target Session Management Function (SMF) supporting a service of VPDN, and sending a session management context request to the target SMF; and selecting, by the SMF, according to the session management context request, a User Plane Function (UPF) supporting the service of VPDN to establish a session, to enable a tunnel between the UPF and the target VPDN to be established.

In some embodiments, the determining, by the AMF, through the NRF, the SMF supporting the service of VPDN comprises: the AMF sending a Network Function (NF) discover request to the NRF, the NF discover request comprising the DNN of the target VPDN; and determining, by the NRF, according to the DNN, an SMF supporting the service of VPDN, and feeding back the SMF as the target SMF to the AMF.

In some embodiments, the UPF supporting the service of VPDN is a UPF supporting an Layer 2 Tunneling Protocol (L2TP).

In some embodiments, the access request for VPDN is carried by a Non-Access Stratum (NAS) message.

In some embodiments, in a case where the NRF does not find an SMF supporting the service of VPDN, the establishment of a session for the service of VPDN failing.

In some embodiments, in a case where the SMF does not find a UPF supporting the service of VPDN, the establishment of a session for the service of VPDN failing.

In some embodiments, the method for access to VPDN further comprises: the UPF receiving a session establishment request from the SMF, and establishing the tunnel in a case where determining that the session to be established is for the service of VPDN, to enable the target VPDN to authenticate the account and the key.

According to one aspect of some embodiments of the present disclosure, there is provided a method for access to VPDN, comprising: a User Equipment (UE) initiating an access request for VPDN on a 5G network, the access request for VPDN comprising an account and a key of a target VPDN; and any one of a method for access to VPDN mentioned above, performed by network side.

According to one aspect of some embodiments of the present disclosure, there is provided a network-side system for access to VPDN, comprising: an AMF configured to receive an access request for VPDN from a user, wherein the access request for VPDN comprises a DNN, an account and a key of the target VPDN, determine, through a NRF, a target SMF supporting a service of VPDN, and send a session management context request to the target SMF; a NRF configured to determine an SMF supporting the service of VPDN, and feed back the SMF as the target SMF to the AMF; and an SMF configured to select, according to the session management context request, a UPF supporting the service of VPDN to establish a session, to enable a tunnel between the UPF and the target VPDN to be established.

In some embodiments, network-side system for access to VPDN further comprises: a UPF configured to receive a session establishment request from the SMF, and establish the tunnel in a case where determining that the session to be established is for the service of VPDN, to enable the target VPDN to authenticate the account and the key.

According to one aspect of some embodiments of the present disclosure, there is provided an AMF, comprising: a memory; and a processor coupled to the memory, the processor being configured to perform, based on instructions stored in the memory, any of the methods, which is performed by an AMF, for access to VPDN mentioned above.

According to one aspect of some embodiments of the present disclosure, there is provided a system for access to VPDN, comprising: any of the above-mentioned network-side systems for access to VPDN; and a UE configured to initiate an access request for VPDN on a 5G network, the access request for VPDN comprising an account and a key of a target VPDN.

### BRIEF DESCRIPTION OF THE DRAWINGS

The accompanying drawings described herein are used for providing a further understanding of this disclosure and constitute a part of this disclosure, and illustrative embodiments of this disclosure and their descriptions are used for explaining this disclosure and do not constitute an improper limitation of this disclosure. In the drawings:
Fig. 1 is a flow diagram of a method for access to VPDN according to some embodiments of the present disclosure.
Fig. 2 is a flow diagram of a method for access to VPDN according to other embodiments of the present disclosure.
Fig. 3A is a signaling interaction diagram of a method for access to VPDN according to some embodiments of the present disclosure.
Fig. 3B is a signaling interaction diagram of a method for access to VPDN according to other embodiments of the present disclosure.
Fig. 4A is a schematic diagram of a network-side system for access to VPDN according to some embodiments of the present disclosure.
Fig. 4B is a schematic diagram of a network architecture of a network-side system for access to VPDN according to some embodiments of the present disclosure.
Fig. 5 is a schematic diagram of a network-side system for access to VPDN according to other embodiments of the present disclosure.
Fig. 6 is a schematic diagram of a network-side system for access to VPDN according to still other embodiments of the present disclosure.
Fig. 7 is a schematic diagram of a system for access to VPDN according to some embodiments of the present disclosure.

### DETAILED DESCRIPTION

The further detailed description of the technical solutions of the present disclosure is made below by the accompanying drawings and embodiments.

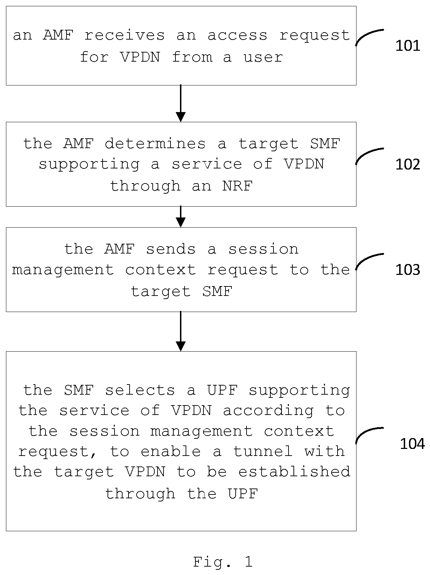

A flow diagram of a method for access to VPDN according to some embodiments of the present disclosure is shown in Fig. 1.

In step 101, an AMF receives an access request for access to VPDN from a user. In some embodiments, the access request for VPDN comprises a DNN of a target VPDN, and an account and a key of the target VPDN.

In some embodiments, the access request for VPDN can be carried by an NAS message, for example, PAP/CHAP protocol identifiers are newly added in an ePCO cell, to enable the access request for VPDN to carry an identification of the service of VPDN: an account and a key of VPDN. In some embodiments, the access request for VPDN can be carried by a PDU Session Establishment Request.

In some embodiments, when the user needs to initiate a request for accessing to a VPDN, a UE sends a access request for VPDN which carries PAP/CHAP protocol identifiers, for example, the PAP/CHAP protocol identifiers are newly added in an ePCO cell, to enable the access request for VPDN to carry a identification of the service of VPDN: an account and a key of VPDN. In some embodiments, the access request of VPDN further comprises the DNN of the target VPDN.

In step 102, the AMF determines a target SMF supporting a service of VPDN through an NRF. In some embodiments, the NRF, when determining that a current session establishment request is for the service of VPDN, determines an SMF supporting the VPDN according to stored information and feeds back the SMF as the target SMF to the AMF.

In step 103, the AMF sends a session management context request to the target SMF according to the feedback information of the NRF.

In step 104, according to the session management context request, the SMF selects a UPF supporting the service of VPDN to establish a session. In some embodiments, since a currently widely used tunneling technique, which is adopted by the service of VPDN, is an L2TP, the UPF supporting the service of VPDN is a UPF supporting the L2TP.

In some embodiments, the session management context request carries DNN information, for the UPF to determine that the session to be established is for the service of VPDN. In some embodiments, the UPF, when determining that a session to be established is for the service of VPDN, establishes a tunnel to the target private network.

By such a method, support of a 5G network element device for the service of VPDN characteristic can be improved, such that a 5G network smoothly undertakes a traditional PAP/CHAP authentication-based service of VPDN, which improves convenience of the access to VPDN; and existing enterprise private network device in a client-side does not need to be changed, which facilitates rapid deployment and widespread application of the method.

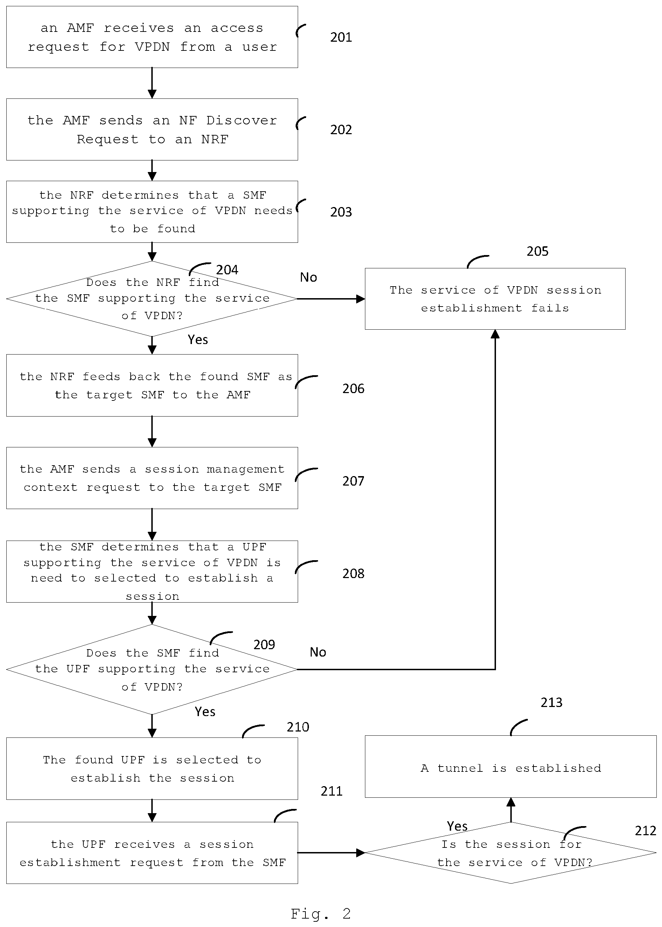

A flow diagram of an method for access to VPND according to other embodiments of the present disclosure is shown in Fig. 2.

In step 201, an AMF receives a access request for VPND from a user, the access request for VPND comprises a DNN of a target VPDN, and an account and a key of the target VPDN.

In step 202, the AMF sends an NF discover request to an NRF, the NF discover request comprises the DNN of the target VPDN.

In step 203, according to the DNN, the NRF determines that an SMF which supports the service of VPDN needs to be provided to the AMF.

In step 204, the NRF determines whether a SMF supporting the service of VPDN is found. If the SMF supporting the service of VPDN is not found, step 205 is performed; and if the SMF supporting the service of VPDN is found, step 206 is performed.

In the step 205, it is determined that establishment of the session for the service of VPDN fails. In some embodiments, feedback can be made to the user that the session establishment fails.

In the step 206, one found SMF supporting the service of VPDN is used as a target SMF, and the target SMF is fed back to the AMF.

In step 207, the AMF sends a session management context request to the target SMF.

In step 208, according to the session management context request, the SMF determines that a UPF which supports the service of VPDN needs to be selected. In some embodiments, in the session management context request, DNN information of the target VPDN can be carried, for the SMF to determine that the request is for the service of VPDN, and then performs the selection for the UPF supporting the service of VPDN.

In step 209, the SMF determines whether a UPF supporting the service of VPDN is found. If the UPF supporting the service of VPDN is found, the step 205 is performed. If the UPF supporting the service of VPDN is not found, step 210 is performed.

In the step 210, the AMF establishes a session with the determined UPF to provoke the UPF establishing a tunnel with the target VPDN.

By such a method, a network element of the 5G network is capable of identifying and processing the access request for the VPDN from the UE, to access the VPDN through the 5G network, which improves convenience of the access to the VPDN; and in the process of the session establishment, make a response to the establishment failure in time in the case of not having the UPF supporting the VPDN, which improves reliability.

In some embodiments, as shown in Fig. 2, the method for access to VPDN can further comprise steps 211 to 213.

In the step 211, the UPF receives a session establishment request from the SMF. In some embodiments, the session establishment request may comprise the DNN of the target VPDN, and the account and key of the target VPDN.

In the step 212, the UPF determines whether a session to be established is for the service of VPDN. If it is determined that the session is for the service of VPDN, the step 213 is performed; and if the session is not for the service of VPDN, a corresponding processing flow for other services in the related art is executed.

In the step 213, the UPF establishes an L2TP tunnel with the target VPDN so that the target VPDN authenticate the account and key. In some embodiments, LNS and AAA of the VPDN can perform PAP or CHAP verification for the user according to the account and key of the target VPDN. If the verification is passed, the establishment of the service of VPDN is successful; and if the verification is not passed, the establishment of the service of VPDN is unsuccessful.

By such a method, information required for the verification performed by the VPDN for the user can be further provided after the establishment of the tunnel is completed, thereby ensuring security of the VPDN while ensuring that the 5G network supports the access to the VPDN.

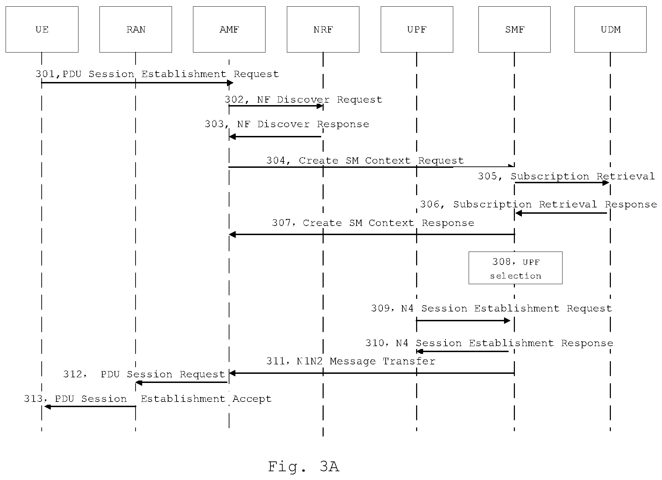

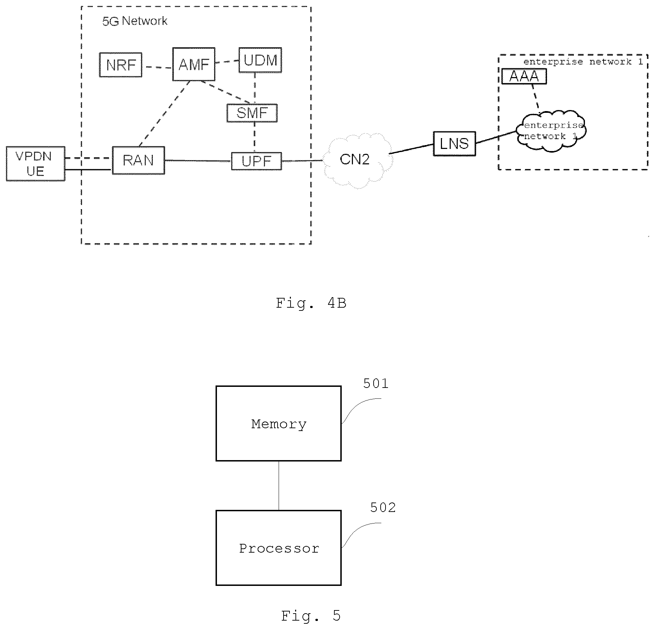

A signaling interaction diagram of a method for access to VPDN according to some embodiments of the present disclosure is shown in Fig. 3A. In some embodiments, connection relations among network elements involved in the method for access to VPDN can be as shown in Fig. 4B, where a network mainly includes two parts, namely a 5G network and an enterprise network as a VPDN, and a user is connected with the enterprise network via the 5G network.

In 301, a UE sends, to an AMF, a PDU Session Establishment Request, which comprises an account and key of a target VPDN that are carried by a cell ePCO, and a DNN.

In 302, the AMF sends an NF discover request to an NRF. The NRF, if identifying the DNN of the VPDN comprised in the request, determines the need to find an SMF which supports the VPDN.

In 303, if the NRF finds a SMF supporting the VPDN, the SMF is fed back as the target SMF to the AMF.

In 304, the AMF provides the DNN, and the account and key of the user in the target VPDN to the SMF, through a Create SM Context Request.

In 305 to 307, the SMF initiates a Subscription Retrieval to a UDM and feeds back a Create SM Context Response to the AMF. For the process, reference can be made to a process of interaction between SMF and UDM in the related art.

In 308, the SMF selects, according to a service characteristic of the session, a UPF supporting the service of VPDN characteristic, such as a UPF device supporting an L2TP.

In 309 to 310, the SMF sends an N4 Session Establishment Request to the selected UPF, and sends, through the N4 Session Establishment Request, the DNN and authentication information of VPDN to the UPF, and then the UPF makes an N4 Session Establishment Response.

In 311 to 313, the SMF informs the UE that the PDU session establishment is successful, through the AMF and a Radio Access Network (RAN).

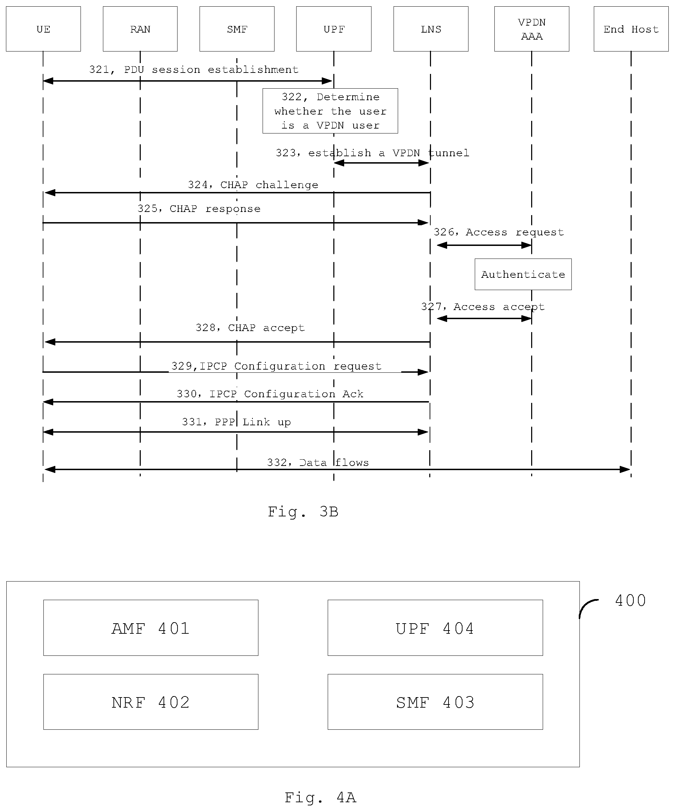

In some embodiments, after the flow of the 5G network part is completed, a flow of accessing the service of VPDN in the 5G system is shown in Fig. 3B, where a CHAP authentication mechanism is taken as an example. In some embodiments, connection relations between network elements involved in the method for access to VPDN may be as shown in Fig. 4B.

In 321, the PDU Session Establishment Request sent by the UE to the UPF comprises the DNN, and the account and key of the target VPDN. In some embodiments, the PDU Session Establishment Request is sent to the UPF by the above processes 301 to 309.

In 322 to 323, the UPF establishes, through the public network, a tunnel of the L2TP with a related LNS under the condition of determining that the session needing to be established is for the service of VPDN.

In 324 to 328, a private network device of the VPDN performs CHAP authentication for the user of VPDN. In some embodiments, this verification process is the same as that in the related art.

By such a method, the DNN of the private network in carried in the session of VPDN by the UE, and by expanding relevant cell characteristics of the NAS message interacted between the UE and the network, and enhancing the support of the 5G network element device for the service of VPDN characteristic, the user of VPDN can access the virtual private network of the enterprise and the virtual private network of the closed site in combination with the original authentication system and authorization mechanism by means of 5G access, to better realize various network communications between the enterprise and branches, between the branches, and between the enterprise and its partner. In addition, in the implementation process of this method, it is not needed to make improvements on the interior of the VPDN, which improves deployment efficiency, reduces difficulty in the implementation, and facilitates widespread application.

A schematic diagram of a network-side system for access to VPDN according to some embodiments of the present disclosure is shown in Fig. 4A.

An AMF 401 is capable of receiving an access request for VPDN from a user, the access request for VPDN comprising a DNN of a target VPDN, and an account and a key of the target VPDN; and the AMF 401 is capable of determining a target SMF supporting a service of VPDN through an NRF, and sending a session management context request to the target SMF. In some embodiments, in the session management context request, DNN information of the target VPDN can be carried, so that the SMF determines that the request is for the service of VPDN, and then performs a selection for a UPF supporting the service of VPDN.

An NRF 402 is capable of determining an SMF supporting the service of VPDN and feeding back the SMF as the target SMF to the AMF. In some embodiments, the NRF may determine whether the DNN of the VPDN is comprised in the request from the AMF, and under the condition of determining that the DNN of the VPDN is comprised in the request from the AMF, initiate a search for the SMF supporting the service of VPDN and provide the found SMF as the target SMF to the AMF, thereby ensuring a support capability of a subsequent node for the VPDN.

The SMF 403 is capable of selecting a UPF supporting the service of VPDN to establish a session, according to the session management context request, so that a tunnel with the target VPDN is established by the UPF. In some embodiments, the SMF 403 may determine whether the DNN of the VPDN is comprised in the request from the AMF, and under the condition of determining that the DNN of the VPDN is comprised in the request from the AMF, initiate a search for a UPF supporting the service of VPDN, thereby ensuring a support capability of a subsequent node for the VPDN.

Such a network-side system improves the support of a 5G network element equipment for the service of VPDN characteristic, for the 5G network to access the virtual private network, which improves convenience of the access to VPDN; it is not needed to change a client-side existing enterprise private network device, which facilitates rapid deployment and widespread application of the network-side system.

In some embodiments, as shown in Fig. 4A, the system for access to VPDN can further comprise a UPF 404 capable of receiving a session establishment request from the SMF, and establishing a tunnel under the condition of determining that the session to be established is for the service of VPDN. In some embodiments, after the tunnel establishment is completed, the UPF provides the user's account and key to the VPDN, for the VPDN's device to perform verification.

Such a network-side system is capable of further providing information required for the verification performed by the VPDN for the user after the tunnel establishment is completed, thereby ensuring security of the VPDN while ensuring that the 5G network supports the access to the VPDN.

In some embodiments, the connection relations among various portions in the system for access to VPDN can be as shown in Fig. 4B, so that on the basis of the existing 5G network and private network, the access to VPDN can be implemented only by performing functional extension for a 5G network device, which reduces difficulty in the implementation.

A schematic structural diagram of a VPDN access system according to one embodiment of the present disclosure is shown in Fig. 5. The network-side system for access to VPDN comprises a memory 501 and a processor 502. The memory 501 can be a magnetic disk, flash memory, or any other non-volatile storage medium. The memory is configured to store instructions in corresponding embodiments of the method for access to VPDN above. The processor 502, which is coupled to the memory 501, can be implemented as one or more integrated circuits, such as a microprocessor or microcontroller. The processor 502 is configured to execute the instructions stored in the memory, which can improve convenience of the access to VPDN and facilitate rapid deployment and widespread application.

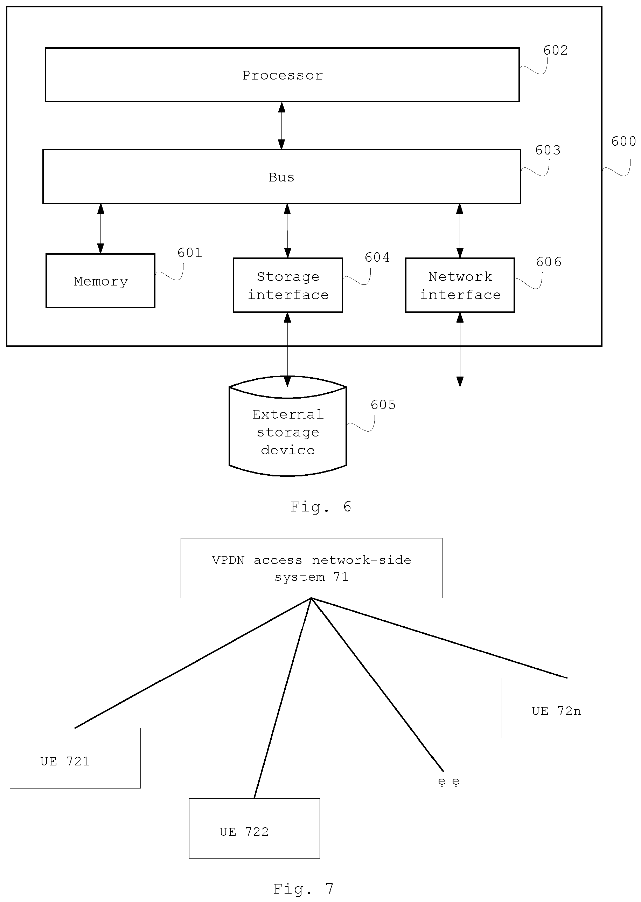

In one embodiment, as also shown in Fig. 6, a access network-side system for access to VPDN 600 comprises a memory 601 and a processor 602. The processor 602 is coupled to the memory 601 through a BUS 603. The network-side system for access to VPDN 600 can also be connected to an external storage device 605 via a storage interface 604 for calling external data, and can also be connected to a network or another computer system (not shown) via a network interface 606. The detailed description thereof is not made herein.

In the embodiment, by storing the data instructions in the memory and processing the above instructions by the processor, convenience of the access to VPDN can be improved, so that rapid deployment and widespread application are facilitated.

In another embodiment, a computer-readable storage medium has thereon stored computer program instructions which, when executed by a processor, implement the steps of the method in the corresponding embodiments of the method for access to VPDN. It will be appreciated by those skilled in the art that the embodiments of the present disclosure can be provided as a method, apparatus, or computer program product. Accordingly, the present disclosure can take a form of an entire hardware embodiment, an entire software embodiment or an embodiment combining software and hardware aspects. Furthermore, the present disclosure can take a form of a computer program product implemented on one or more computer-available non-transitory storage media (including, but not limited to, a disk memory, CD-ROM, optical memory, and the like) having computer-available program code embodied therein.

A schematic diagram of a system for access to VPDN according to some embodiments of the present disclosure is shown in Fig. 7.

The network-side system for access to VPDN 71 can be any of those mentioned above. The system for access to VPDN further comprises UEs 721 to 72n, wherein n is a positive integer. When a user needs to initiate a request for accessing a VPDN, the UE sends a access request for VPDN in which PAP/CHAP protocol identifiers are carried, for example, PAP/CHAP protocol identifiers are newly added in an ePCO cell, to enable the access request for VPDN to carry an identification of the service of VPDN: an account and a key of VPDN. In some embodiments, the access request for VPDN further comprises a DNN of a target VPDN.

In such a system, the UE, when initiating the request, can actively provide related information of authentication of VPDN, and the information can be identified by the network side, so that a network element with a capability of processing the service of VPDN is selected to process the access request, and then the virtual private network is accessed, which improves convenience and efficiency of the access to VPDN.

The present disclosure is described with reference to the flow charts and/or block diagrams of methods, devices (systems), and computer program products according to the embodiments of the present disclosure. It will be understood that each step and/or block of the flow charts and/or block diagrams as well as a combination of steps and/or blocks of the flow charts and/or block diagrams may be implemented by a computer program instruction. These computer program instructions may be provided to a processor of a general purpose computer, special purpose computer, an embedded processing machine, or other programmable data processing devices to produce a machine, such that the instructions executed by a processor of a computer or other programmable data processing devices produce a device for realizing a function designated in one or more steps of a flow chart and/or one or more blocks in a block diagram.

These computer program instructions may also be stored in a computer readable memory that can guide a computer or other programmable data processing device to operate in a manner, such that the instructions stored in the computer readable memory produce a manufacture including an instruction device. The instruction device realizes a function designated in one or more steps in a flow chart or one or more blocks in a block diagram.

These computer program instructions may also be loaded onto a computer or other programmable data processing devices, such that a series of operational steps are performed on a computer or other programmable device to produce a computer-implemented processing, such that the instructions executed on a computer or other programmable devices provide steps for realizing a function designated in one or more steps of the flow chart and/or one or more blocks in the block diagram.

Heretofore, the present disclosure has been described in detail. Some details well known in the art are not described to avoid obscuring the concept of the present disclosure. According to the above description, those skilled in the art would fully know how to implement the technical solutions disclosed herein.

The method and device of the present disclosure may be implemented in many manners. For example, the method and device of the present disclosure may be implemented by a software, hardware, firmware, or any combination of a software, hardware, and firmware. The above-described sequence of steps for the method is for illustrative purposes only, and the steps of the method of the present disclosure are not limited to the sequence specifically described above unless otherwise specifically stated. Moreover, in some embodiments, the present disclosure may also be embodied as programs recorded in a recording medium, which include machine readable instructions for implementing the method according to the present disclosure. Thus, the present disclosure also covers recording medium storing programs for performing the method according to the present disclosure.

Finally, it should be explained that: the aforementioned embodiments are only used to describe the technical solution of the present disclosure rather than limiting the same; although detailed explanations are made to the present disclosure by referring to preferred embodiments, a common technical person in the art should understand that: it is still possible to make amendments to the embodiments of the present disclosure or make equivalent replacements to part of the technical features; without departing from the scope of the present disclosure, they should all be covered in the scope of the technical solution for which protection is sought in the present disclosure.

## Claims

1. A method for access to Virtual Private Dial-up Networks (VPDN), comprising:
receiving, by an Access and Mobility Management Function (AMF), an access request for VPDN from a user (101), the access request for VPDN comprising a Data Network Name, DNN, an account and a key of a target VPDN;
determining, by the AMF, through a Network Function Repository Function (NRF), a target Session Management Function (SMF) supporting a service of VPDN(102), and sending a session management context request to the target SMF(103); and
selecting, by the SMF, according to the session management context request, a User Plane Function (UPF) supporting the service of VPDN to establish a session, to enable a tunnel between the UPF and the target VPDN to be established(104).

2. The method for access to VPDN according to claim 1, wherein determining, by the AMF, through the NRF, the SMF supporting the service of VPDN comprises:
the AMF sending a Network Function (NF) discover request to the NRF (202) , the NF discover request comprising the DNN of the target VPDN; and
determining, by the NRF, according to the DNN, an SMF supporting the service of VPDN (203), and feeding back the SMF as the target SMF to the AMF (206) ;
optionally,
wherein in a case where the NRF does not find an SMF supporting the service of VPDN, the establishment of a session for the service of VPDN fails

3. The method for access to VPDN according to claim 1, wherein the UPF supporting the service of VPDN is a UPF supporting an L2TP.

4. The method for access to VPDN according to claim 1, wherein the access request for VPDN is carried by a Non-Access Stratum (NAS) message.

5. The method for access to VPDN according to claim 1, wherein,
in a case where the SMF does not find a UPF supporting the service of VPDN, the establishment of a session for the service of VPDN failing (205) .

6. The method for access to VPDN according to claim 1, further comprising,
the UPF receiving a session establishment request from the SMF, and establishing the tunnel in a case where determining that the session to be established is for the service of VPDN, to enable the target VPDN to authenticate the account and the key(211,212,213).

7. A method for access to Virtual Private Dial-up Networks, VPDN, which is performed by an Access and Mobility Management Function (AMF), comprising:
receiving, an access request for VPDN from a user (101), the access request for VPDN comprising a Data Network Name, DNN, an account and a key of a target VPDN;
determining, through a Network Function Repository Function (NRF), a target Session Management Function (SMF) supporting a service of VPDN(102), and sending a session management context request to the target SMF(103).

8. A method for access to Virtual Private Dial-up Networks, VPDN, comprising:
a User Equipment (UE) initiating an access request for VPDN on a 5G network(301),
wherein the access request for VPDN comprises a Data Network Name, DNN, an account and a key of a target VPDN;
wherein a network-side system for access to the VPDN performs a method according to any of claims 1 to 6.

9. The method for access to VPDN according to claim 8, wherein the access request for VPDN further comprises PAP/CHAP protocol identifiers.

10. A network-side system for access to Virtual Private Dial-up Networks, VPDN comprising:
an Access and Mobility Management Function (AMF) (401) configured to receive a access request for VPDN from a user, wherein the access request for VPDN comprises a Data Network Name, DNN, an account and a key of the target VPDN, determine, through a Network Function Repository Function (NRF), a target Session Management Function (SMF) supporting a service of VPDN, and send a session management context request to the target SMF;
a NRF(402) configured to determine an SMF supporting the service of VPDN, and feed back the SMF as the target SMF to the AMF; and
an SMF(403) configured to select, according to the session management context request, a User Plane Function (UPF) supporting the service of VPDN to establish a session, to enable a tunnel between the UPF and the target VPDN to be established.

11. The network-side system for access to VPDN according to claim 10, further comprising: the UPF (404), wherein the UPF is configured to receive a session establishment request from the SMF, and establish the tunnel in a case where determining that the session to be established is for the service of VPDN, to enable the target VPDN to authenticate the account and the key.

12. An Access and Mobility Management Function(AMF), comprising:
a memory (501); and
a processor (502) coupled to the memory, wherein the processor is configured to perform a method according to claim 7 based on instructions stored in the memory.

13. A system for access to Virtual Private Dial-up Networks, VPDN, comprising:
a network-side system (71) for access to VPDN according to claim 10 or 11; and
a User Equipment (UE) (721,722,72n) configured to initiate an access request for VPDN on a 5G network, the access request for VPDN comprising an account and a key of a target VPDN.

## Patentansprüche

1. Verfahren zum Zugreifen auf VPDN (Virtual Private Dial-up Networks), das Folgendes beinhaltet:
Empfangen, durch eine AMF (Access and Mobility Management Function), einer Zugriffsanforderung für VPDN von einem Benutzer (101), wobei die Zugriffsanforderung für VPDN einen DNN (Data Network Name), ein Konto und einen Schlüssel eines Ziel-VPDN umfasst;
Bestimmen, durch die AMF, über eine NRF (Network Function Repository Function), einer einen VPDN-Dienst (102) unterstützenden Ziel-SMF (Session Management Funktion), und Senden einer Session-Management-Kontextanforderung zur Ziel-SMF (103); und
Auswählen, durch die SMF, gemäß der Session-Management-Kontextanforderung, einer den VPDN-Dienst unterstützenden UPF (User Plane Function) zum Aufbauen einer Sitzung, damit ein Tunnel zwischen der UPF und dem Ziel-VPDN aufgebaut (104) werden kann.

2. Verfahren zum Zugreifen auf VPDN nach Anspruch 1, wobei das Bestimmen, durch die AMF, über die NRF, der den VPDN-Dienst unterstützenden SMF Folgendes beinhaltet:
Senden, durch die AMF, einer NF-(Network Function)-Discover-Anforderung zur NRF (202), wobei die NF-Discover-Anforderung den DNN des Ziel-VPDN enthält; und
Bestimmen, durch die NRF, gemäß dem DNN, einer den VPDN-Dienst (203) unterstützenden SMF und Zurückmelden der SMF als Ziel-SMF an die AMF (206); wobei optional,
falls die NRF keine den VPDN-Dienst unterstützende SMF findet, der Aufbau einer Sitzung für den VPDN-Dienst fehlschlägt.

3. Verfahren zum Zugreifen auf VPDN nach Anspruch 1, wobei die den VPDN-Dienst unterstützende UPF eine L2TP unterstützende UPF ist.

4. Verfahren zum Zugreifen auf VPDN nach Anspruch 1,
wobei die Zugriffsanforderung für VPDN durch eine NAS-(Non-Access Stratum)-Nachricht übertragen wird.

5. Verfahren zum Zugreifen auf VPDN nach Anspruch 1, wobei
falls die SMF keine den VPDN-Dienst unterstützende UPF findet, der Aufbau einer Sitzung für den VPDN-Dienst fehlschlägt (205).

6. Verfahren zum Zugreifen auf VPDN nach Anspruch 1, das ferner Folgendes beinhaltet:
Empfangen, durch die UPF, einer Sitzungsaufbauanforderung von der SMF und Aufbauen des Tunnels, falls festgestellt wird, dass die aufzubauende Sitzung für den VPDN-Dienst bestimmt ist, um es dem Ziel-VPDN zu ermöglichen, das Konto und den Schlüssel (211, 212, 213) zu authentifizieren.

7. Verfahren zum Zugreifen auf VPDN (Virtual Private Dial-up Networks), durchgeführt von einer AMF (Access and Mobility Management Function), das Folgendes beinhaltet:
Empfangen einer Zugriffsanforderung für VPDN von einem Benutzer (101), wobei die Zugriffsanforderung für VPDN einen DNN (Data Network Name), ein Konto und einen Schlüssel eines Ziel-VPDN umfasst;
Bestimmen, über eine NRF (Netwerk Function Repository Function), einer einen VPDN-Dienst (102) unterstützenden Ziel-SMF (Session Management Function) und Senden einer Session-Management-Kontextanforderung zur Ziel-SMF (103).

8. Verfahren zum Zugreifen auf VPDN (Virtual Private Dial-up Networks), das Folgendes beinhaltet:
Initiieren, durch ein UE (User Equipment), einer Zugriffsanforderung für VPDN in einem 5G-Netzwerk (301),
wobei die Zugriffsanforderung für VPDN einen DNN (Data Network Name), ein Konto und einen Schlüssel eines Ziel-VPDN umfasst;
wobei ein netzwerkseitiges System zum Zugreifen auf das VPDN ein Verfahren nach einem der Ansprüche 1 bis 6 durchführt.

9. Verfahren zum Zugreifen auf VPDN nach Anspruch 8, wobei die Zugriffsanforderung für VPDN ferner PAP/CHAP-Protokollkennungen umfasst.

10. Netzwerkseitiges System zum Zugreifen auf VPDN (Virtual Private Dial-up Networks), das Folgendes umfasst:
eine AMF (Access and Mobility Management Function) (401), konfiguriert zum Empfangen einer Zugriffsanforderung für VPDN von einem Benutzer, wobei die Zugriffsanforderung für VPDN einen DNN (Data Network Name), ein Konto und einen Schlüssel des Ziel-VPDN umfasst, Bestimmen, über eine NRF (Network Function Repository Function), einer einen VPDN-Dienst unterstützenden Ziel-SMF (Session Management Function), und Senden einer Session-Management-Kontextanforderung zur Ziel-SMF;
eine NRF (402), konfiguriert zum Bestimmen einer den VPDN-Dienst unterstützenden SMF und Zurückmelden der SMF als Ziel-SMF an die AMF; und
eine SMF (403), konfiguriert zum Auswählen, gemäß der Session-Management-Kontextanforderung, einer den VPDN-Dienst unterstützenden UPF (User Plane Function) zum Aufbauen einer Sitzung, damit ein Tunnel zwischen der UPF und dem Ziel-VPDN aufgebaut werden kann.

11. Netzwerkseitiges System zum Zugreifen auf VPDN nach Anspruch 10, das ferner Folgendes umfasst:
die UPF (404), wobei die UPF konfiguriert ist zum Empfangen einer Sitzungsaufbauanforderung von der SMF und zum Aufbauen des Tunnels, falls festgestellt wird, dass die aufzubauende Sitzung für den VPDN-Dienst bestimmt ist, um es dem Ziel-VPDN zu ermöglichen, das Konto und den Schlüssel zu authentifizieren.

12. AMF (Access and Mobility Management Function), die Folgendes umfasst:
einen Speicher (501); und
einen mit dem Speicher gekoppelten Prozessor (502), wobei der Prozessor zum Durchführen eines Verfahrens nach Anspruch 7 auf der Basis von im Speicher gespeicherten Befehlen konfiguriert ist.

13. System zum Zugreifen auf VPDN (Virtual Private Dial-up Networks), das Folgendes umfasst:
ein netzwerkseitiges System (71) zum Zugreifen auf VPDN nach Anspruch 10 oder 11; und
ein UE (User Equipment) (721, 722, 72n), konfiguriert zum Initiieren einer Zugriffsanforderung für VPDN in einem 5G-Netzwerk, wobei die Zugriffsanforderung für VPDN ein Konto und einen Schlüssel eines Ziel-VPDN umfasst.

## Revendications

1. Procédé d'accès à des réseaux privés virtuels à lignes commutées (VPDN), comprenant :
la réception, par une fonction de gestion d'accès et de mobilité (AMF), d'une demande d'accès à un VPDN en provenance d'un utilisateur (101) la demande d'accès à un VPDN comprenant un nom de réseau de données, DNN, un compte et une clé d'un VPDN cible ;
la détermination, par l'AMF, par le biais d'une fonction de dépôt de fonctions réseau (NRF), d'une fonction de gestion de session cible (SMF) qui prend en charge un service de VPDN (102), et l'envoi d'une demande de contexte de gestion de session à la SMF cible (103) ; et
la sélection, par la SMF, conformément à la demande de contexte de gestion de session, d'une fonction de plan utilisateur (UPF) qui prend en charge le service de VPDN pour établir une session, afin de permettre l'établissement d'un tunnel entre l'UPF et le VPDN cible (104).

2. Procédé d'accès à des VPDN selon la revendication 1, dans lequel la détermination, par l'AMF, par le biais de la NRF, de la SMF qui prend en charge le service de VPDN comprend :
l'envoi par l'AMF d'une demande de découverte de fonction réseau (NF) à la NRF (202), la demande de découverte de NF comprenant le DNN du VPDN cible ; et
la détermination, par la NRF, conformément au DNN, d'une SMF qui prend en charge le service de VPDN (203), et le renvoi de la SMF comme SMF cible à l'AMF (206) ;
éventuellement,
dans lequel dans le cas où la NRF ne trouve pas de SMF prenant en charge le service de VPDN, l'établissement d'une session pour le service de VPDN échoue.

3. Procédé d'accès à des VPDN selon la revendication 1, dans lequel l'UPF prenant en charge le service de VPDN est une UPF prenant en charge un L2TP.

4. Procédé d'accès à des VPDN selon la revendication 1, dans lequel la demande d'accès à un VPDN est transmise par un message de strate de non-accès (NAS).

5. Procédé d'accès à des VPDN selon la revendication 1, dans lequel,
dans le cas où la SMF ne trouve pas d'UPF prenant en charge le service de VPDN, l'établissement d'une session pour le service de VPDN échoue (205)

6. Procédé d'accès à des VPDN selon la revendication 1, comprenant en outre,
la réception par l'UPF d'une demande d'établissement de session en provenance de la SMF, et l'établissement du tunnel dans le cas où il est déterminé que la session à établir est destinée au service de VPDN, pour permettre au VPDN cible d'authentifier le compte et la clé (211,212,213).

7. Procédé d'accès à des réseaux privés virtuels à lignes commutées, VPDN, réalisé par une fonction de gestion d'accès et de mobilité, AMF, comprenant :
la réception d'une demande d'accès à un VPDN en provenance d'un utilisateur (101), la demande d'accès à un VPDN comprenant un nom de réseau de données, DNN, un compte et une clé d'un VPDN cible ;
la détermination, par le biais d'une fonction de dépôt de fonction réseau, NRF, d'une fonction de gestion de session cible (SMF) qui prend en charge un service de VPDN (102), et l'envoi d'une demande de contexte de gestion de session à la SMF cible (103).

8. Procédé d'accès à des réseaux privés virtuels à lignes commutées, VPDN, comprenant :
le lancement par un équipement utilisateur, UE, d'une demande d'accès à un VPDN sur un réseau 5G (301),
dans lequel la demande d'accès à un VPDN comprend un nom de réseau de données, DNN, un compte et une clé d'un VPDN cible ;
dans lequel un système côté réseau pour l'accès au VPDN réalise un procédé selon l'une quelconque des revendications 1 à 6.

9. Procédé d'accès à des VPDN selon la revendication 8, dans lequel la demande d'accès à un VPDN comprend en outre des identifiants de protocole PAP/CHAP.

10. Système côté réseau pour l'accès à des réseaux privés virtuels à lignes commutées, VPDN, comprenant :
une fonction de gestion d'accès et de mobilité (AMF) (401) configurée pour recevoir une demande d'accès à un VPDN en provenance d'un utilisateur, dans lequel la demande d'accès à un VPDN comprend un nom de réseau de données, DNN, un compte et une clé du VPDN cible, déterminer, par le biais d'une fonction de dépôt de fonctions réseau (NRF), une fonction de gestion de session cible (SMF) qui prend en charge un service de VPDN, et envoyer une demande de contexte de gestion de session à la SMF cible ;
une NRF (402) configurée pour déterminer une SMF qui prend en charge le service de VPDN, et renvoyer la SMF comme SMF cible à l'AMF ; et
une SMF (403) configurée pour sélectionner, conformément à la demande de contexte de gestion de session, une fonction de plan utilisateur (UPF) qui prend en charge le service de VPDN pour établir une session, afin de permettre l'établissement d'un tunnel entre l'UPF et le VPDN cible.

11. Système côté réseau pour l'accès à des VPDN selon la revendication 10, comprenant en outre :
une UPF (404), dans lequel l'UPF est configurée pour recevoir une demande d'établissement de session en provenance de la SMF, et établir le tunnel dans le cas où il est déterminé que la session à établir est destinée au service de VPDN, pour permettre au VPDN cible d'authentifier le compte et la clé.

12. Fonction de gestion d'accès et de mobilité (AMF) comprenant :
une mémoire (501) ; et
un processeur (502) couplé à la mémoire, dans lequel le processeur est configuré pour réaliser un procédé selon la revendication 7 sur la base d'instructions stockées dans la mémoire.

13. Système d'accès à des réseaux privés virtuels à lignes commutées, VPDN, comprenant :
un système côté réseau (71) pour accéder à un VPDN selon la revendication 11 ou 12 ; et
un équipement utilisateur (UE) (721, 722, 72n) configuré pour lancer une demande d'accès à un VPDN sur un réseau 5G, la demande d'accès à un VPDN comprenant un compte et une clé d'un VPDN cible.
